# EUROPÄISCHE PATENTSCHRIFT

(11) **EP 1 350 028 B1**
(45) Veröffentlichungstag und Bekanntmachung des Hinweises auf die Patenterteilung: **10.09.2008**
(21) Anmeldenummer: 02706631.5
(22) Anmeldetag: 28.01.2002
(51) Int. Cl.: F03D 9/00, F03D 11/00, F03D 11/04

(54) **WINDENERGIEANLAGE MIT MEER- ODER BRACKWASSERENTSALZUNGSANLAGE**
WIND ENERGY INSTALLATION COMPRISING A SEAWATER OR BRACKISH WATER DESALINATION PLANT
INSTALLATION EOLIENNE AVEC SYSTEME DE DESSALEMENT D'EAU DE MER OU D'EAU SAUMATRE

(30) Priorität: 06.02.2001 DE 10105181
(43) Veröffentlichungstag der Anmeldung: 08.10.2003
(73) Patentinhaber: Aerodyn Engineering GmbH, 24768 Rendsburg (DE)
(72) Erfinder: SIEGFRIEDSEN, Sönke, 25878 Drage (DE)
(74) Vertreter: Biehl, Christian
(86) Internationale Anmeldenummer: PCT/DE2002/000278
(87) Internationale Veröffentlichungsnummer: WO 2002/063165

(56) Entgegenhaltungen:
- DE-A- 3 704 280
- DE-A- 3 808 536
- DE-A- 4 321 050
- US-A- 5 507 943
- US-A- 6 100 600

## Beschreibung

Die Erfindung betrifft eine Windenergieanlage mit einem Turm, einer von diesem getragenen Gondel, einem in der Gondel gelagerten Rotor und wenigstens einer von dem Rotor mechanisch angetriebenen, eine Umkehr-Osmose-Anlage speisenden Druckpumpe.

Der Erzeugung von elektrischer Energie dienende Windenergieanlagen sind in verschiedener Ausbildung bekannt. Es sind weiter Meerwasserentsalzungsanlagen bekannt, die - meist unter Nutzung von fossilen Energieträgern - Meer- oder Brackwasser entsalzen. Auch bei nach dem Umkehr-Osmose-Verfahren arbeitenden elektrisch betriebenen Anlagen wird meist unter Verwendung von fossilen Brennstoffen erzeugte elektrische Energie genutzt.

Um den Einsatz regenerativer Energiequellen zu ermöglichen, ist bereits vorgeschlagen worden, die elektrische Energie, die zum Betreiben der Pumpen und sonstigen elektrischen Aggregate einer Umkehr-Osmose-Anlage erforderlich ist, mittels einer Windenergienanlage zu erzeugen, so bspw. in der US 4,187,173, der DE 200 13 613 U1, der DE 197 14 512 C2, der DE 198 50 565 A1 und der DE 43 21 050 A1. Es ist offenbar, daß der Wirkungsgrad bei einer solchen Zusammenschaltung konventioneller Anlagen gering ist.

Aus der DE 38 08 536 A1 ist eine Windenergieanlage bekannt, bei der der Rotor über ein Winkelgetriebe auf einen Pumpensatz wirkt, der auf einen im Turm angeordneten Druckbehälter wirkt. Dieser Druckbehälter wiederum versorgt eine außerhalb der Windenergieanlage angeordneten Umkehr-Osmose-Anlage.

Die vorbekannten Anlagen sind ist konstruktiv aufwendig.

Der Erfindung liegt daher die Aufgabe zugrunde, eine Windenergieanlage zu schaffen, die bei einem einfachen Aufbau mit einem hohen Wirkungsgrad Meer- oder Brackwasser unter Erzeugung von Trinkwasser entsalzen kann.

Erfindungsgemäß wird diese Aufgabe gelöst durch die Merkmale des Anspruchs 1, die Unteransprüche geben vorteilhafte Ausgestaltungen der Erfindung an.

Der Kern der Erfindung ist es, den wesentlichen Teil der zur Verfügung stehenden kinematischen Energie einer Windenergieanlage direkt für den Antrieb von Pumpenaggregaten zu verwenden, die den erforderlichen Druck und Volumenstrom des Meer- oder Brackwassers für eine Umkehr-Osmose-Anlage erzeugen, wobei alle Funktionselemente wie Rohwasserreservoir, Filtereinrichtung, Pumpeneinheiten, Umkehrosmoseeinheiten und Trinkwasservorratstank in der Windenergieanlage integriert sind. Bei dieser Ausführung wird es vermieden, daß durch einen Generator elektrische Energie erzeugt wird, die dann wieder in mechanische Energie umgesetzt wird. Diese Umwandlungskette bedeutet doppelte Wirkungsgradverluste und hohe Kosten für die erforderlichen Bauteile und Aggregate.

Die rotatorische Energie des Windenergieanlagenrotors wird direkt oder indirekt über ein Getriebe auf ein oder mehrere Pumpenaggregate in der Gondel der Windenergieanlage übertragen. Diese direkt mechanisch angetriebenen Pumpen werden mit dem zu entsalzenen Meer- oder Brackwasser vom Turmfuß versorgt und erzeugen einen drehzahlabhängigen Volumenstrom. Über ein Ventilsystem wird die Umkehrosmoseeinheit mit diesem Meer- oder Brackwasser beaufschlagt.

In Abhängigkeit der Ventilsteuerung und der Anzahl der Umkehrosmoseeinheiten wird ein Druck in dem System aufgebaut. Druck und Volumenstrom werden über eine Regelleinrichtung gesteuert und den jeweiligen Betriebsbedingungen angepaßt. Ein Zwischenspeicher sorgt für den kurzzeitigen Ausgleich von Lastschwankungen im System. Über die Regeleinrichtung können auch ggf. mehrere Pumpeneinheiten und Umkehrosmoseeinheiten über Ventile zu oder abgeschaltet werden, um die jeweils anstehende Rotorleitung zu nutzen.

Die Filtereinrichtung und Umkehrosmoseeinheit sind vorzugsweise im oberen Teil des Turmes untergebracht und werden von oben aus der Gondel mit dem Druckmedium versorgt. Vorzugsweise ist dabei die Filter- und Umkehrosmoseeinrichtung drehbar an der Gondel in einem Drehrahmen befestigt, damit die Druckwasserleitung fest mit der Pumpenanlage verbunden werden kann. Darunter angeordnet befindet sich der Trinkwassertank, im Turm fest angebracht, in dem das Trinkwasser aus der Umkehr-Osmose-Anlage hineinläuft. Durch die Höhe der Wassersäule wird gleichzeitig ein Druck in der Trinkwasserabführleitung erzeugt, die eine Überbrückung von größeren Entfernungen ermöglicht.

Zur Durchführung der Meer- oder Brackwasserzuleitung und für den Personenaufstieg ist der Trinkwassertank zentral mit einem Kanal versehen. In dem Gründungsteil der Windenergieanlage ist ein Meer- oder Brackwasserreservoir mit Vorfilter, Chlorierungsanlage und Förderpumpe angebracht. Besonders vorteilhaft ist es, wenn die Windenergieanlage als Offshore-Anlage ausgeführt ist und direkt im Meer bzw. im Brackwassergewässer installiert wird. Das Rohwasserreservoir mit den erforderlichen Bauelementen kann direkt im Gründungsteil unterhalb des Wasserspiegels eingebaut werden und direkt mit nahezu unbegrenzten Meer- bzw. Brackwassermengen versorgt werden.

Die kontinuierlich anfallenden Filterschlämme und sonstige Abfallkonzentrate können wieder direkt in das Meer bzw. das Brackwasser abgegeben werden.

Die gesamte Funktionseinheit ist direkt in der Offshore-Windenergieanlage integriert. Lediglich eine Wasserrohrleitung muß an Land zum Verbraucher geführt werden. Die erforderliche elektrische Hilfsenergie für Nebenaggregate wird durch einen kleindimensionierten Generator erzeugt.

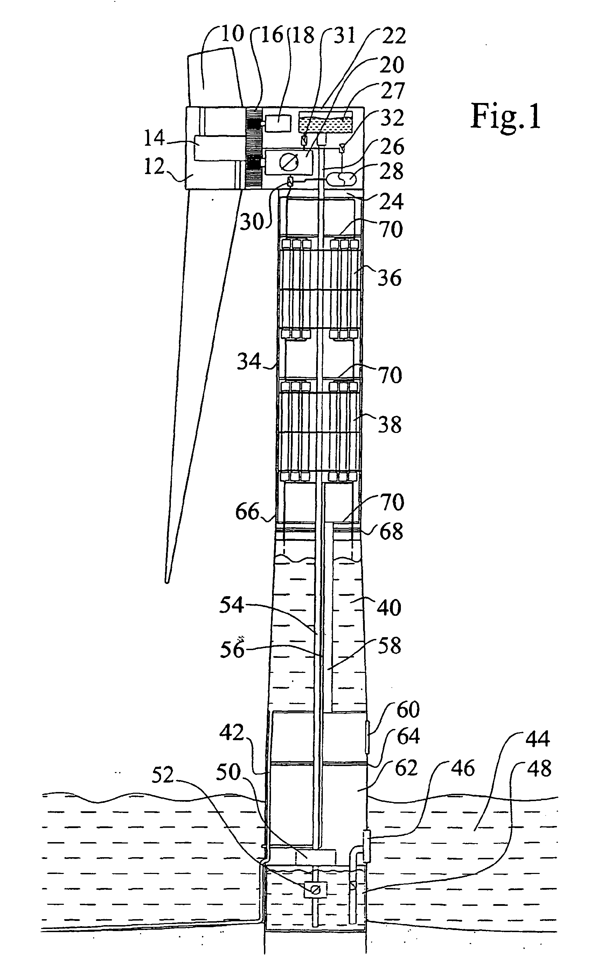

Die Fig. 1 beschreibt eine bevorzugte Ausführungsform der Erfindung.

Die Energiewandlung der Windenergieanlage von translatorischer Luftbewegung in Rotationsenergie erfolgt über die Rotorblätter 10, die an der Rotornabe 12 schwenkbar gelagert sind und über die Blattverstellung 14 in ihrem Einstellwinkel verändert werden können. Über das Getriebe 16, das durch die Nabe 12 rotorseitig angetrieben wird, wird die Drehzahl der Abtriebswellen auf 1500 bis 3000 min⁻¹ übersetzt. An diesen schnell drehenden Abtriebswellen wird ein Hilfsgenerator 18 und eine oder mehrere Druckpumpen 20 angetrieben. Die von dem Hilfsgenerator 18 erzeugte elektrische Energie wird von einer Batterie zwischengespeichert, die die Regeleinrichtung versorgt.

Diese Bauteile befinden sich in der Gondel 22 der Windenergieanlage, die der veränderlichen Windrichtung über die Windrichtungsnachführung 24 kontinuierlich ausgerichtet - wird. Über eine Drehdurchführung 26 wird das Meer- oder Brackwasser in den Vorratstank 27 befördert und über das Ventil 31 der Druckpumpe 20 in der drehbaren Gondel 22 zugeführt. Die Druckpumpe 20 setzt das zugeführte Meer- bzw. Brackwasser unter Druck.

Der Druckspeicher 28 sorgt dabei für einen Ausgleich von Lastspitzen und glättet damit den zeitlichen Druckverlauf. Über die Regeleinrichtung 32 wird mit Hilfe des Regelventils 30 der Volumenstrom des unter Druck stehenden Meer- oder Brackwassers sowie über die Blattverstellung 14 die Leistungsabgabe des Rotor aufeinander abgestimmt geregelt.

Unterhalb der Gondel 22 sind in einem mitdrehenden Drehrahmen 34 die Filtereinheiten 36 und die Umkehrosmoseeinrichtung 38 angeordnet. Durch die mit der Gondel mitdrehende Aufhängung können die Druckrohre zwischen den Druckpumpen 20 und der Filtereinheit 36 sowie der Umkehrosmoseeinrichtung 38 fest verbunden werden. Unterhalb der Umkehrosmoseeinrichtung 38 befindet sich der Trinkwassertank 40, der als Reservoir dient. Aufgrund der Einbauhöhe des Tanks über dem Boden kann der statische Druck das Wasser über die Trinkwasserleitung 42 über größere Distanzen befördern.

In dieser vorgeschlagenen Lösung ist die Windenergieanlage direkt am Meer oder im Brackwassergewässer installiert, so daß die Anlage allseits von Meer- bzw. Brackwasser 44 umgeben ist. Über einen Rohwasserfilter 46 gelangt das Wasser in ein Rohwasserreservoir 48, das sich unterhalb der Wasseroberfläche befindet. Über eine Elektrolyse-Chlorierung 50 wird das Wasser chemisch vorbehandelt. Eine elektrisch betriebene Hebepumpe 52 befördert das Meer- bzw. Brackwasser über das Rohwasserheberohr 54, die Drehdurchführung 26 und den Vorratstank 27 zur Druckpumpe 20 in der Gondel 22. Parallel zu dem Rohwasserheberohr 54 ist das Abwasserrohr 56 angeordnet, das das Salzwasserkonzentrat und die Filterschlämme aus der Filtereinrichtung 36 in das Meer bzw. das Brackwasser zurückführt. Diese Rohre sind zentrisch zum Außenrohr angeordnet und befinden sich in dem Durchstiegsrohr 58 innerhalb des Trinkwassertanks 40. Dieses Durchstiegsrohr 58 dient weiterhin zum Personenaufstieg für Wartungs- oder Reparaturarbeiten, dabei wird der untere Turmteil durch die Eingangstür 60 erreicht.

Die gesamte Anlage ist über das Gründungsbauteil 62 mit dem Meeresboden verbunden. Über den Fußflansch 64 ist der Turm 66 mit dem Gründungsteil 62 verbunden. Dabei besteht der Turm 66 aus dem unteren Turmsegment mit dem Trinkwassertank 40 und dem oberen Turmsegment mit der Filtereinheit 36 und der Umkehrosmoseeinrichtung 38. Beide Turmteile sind über den Verbindungsflansch 68 miteinander verbunden. Für Wartungszwecke an der Filtereinheit 36 und der Umkehrosmoseeinrichtung 38 sind in den Drehrahmen 34 zwei Wartungsbühnen 70 jeweils unterhalb der Baugruppen angeordnet.

## Patentansprüche

1. Windenergieanlage mit einem Turm (66), einer von diesem getragenen Gondel (22), einem in der Gondel (22) gelagerten Rotor (10, 12) und wenigstens einer von dem Rotor (10, 12) mechanisch angetriebenen, eine Rohwasser aufbereitende Umkehr-Osmose-Anlage speisende Druckpumpe (20), **dadurch gekennzeichnet, daß** die Aggregate der Umkehr-Osmose-Anlage nämlich Rohwasserreservoir, Filtereinrichtung, Pumpeneinheiten, Umkehrosmoseeinheiten und Trinkwasservorratstank in dem Turm (66) angeordnet sind.

2. Windenergieanlage nach Anspruch 1, **dadurch gekennzeichnet, daß** die wenigstens eine Druckpumpe (20) in der Gondel (22) angeordnet ist.

3. Windenergieanlage nach Anspruch 1 oder 2, **gekennzeichnet durch** ein von der Rotornabe (12) angetriebenes, die wenigstens eine Druckpumpe (20) antreibendes Getriebe (16).

4. Windenergieanlage nach einem der vorangehenden Ansprüche, **gekennzeichnet durch** einen zwischen der Druckpumpe und den Aggregaten der Umkehr-Osmose-Anlage liegenden Druckspeicher (28).

5. Windenergieanlage nach einem der vorangehenden Ansprüche, **dadurch gekennzeichnet, daß** der Druckspeicher (28) in der Gondel (22) angeordnet ist.

6. Windenergieanlage nach einem der vorangehenden Ansprüche, **dadurch gekennzeichnet, daß** die Umkehr-Osmose-Anlage mit der Gondel (22) drehbar in dem Turm (66) gelagert ist.

7. Windenergieanlage nach einem der vorangehenden Ansprüche, **dadurch gekennzeichnet, daß** das aufzubereitende Rohwasser Brackwasser ist.

8. Windenergieanlage nach einem der vorangehenden Ansprüche, **dadurch gekennzeichnet, daß** sie mit einem Rohwasserreservoir (48) versehen ist.

9. Windenergieanlage nach einem der vorangehenden Ansprüche, **gekennzeichnet durch** einen im unteren Turmsegment angeordneten Trinkwassertank (40).

10. Windenergieanlage nach einem der vorangehenden Ansprüche, **gekennzeichnet durch** einen von der Rotornabe (12) angetriebenen Hilfsgenerator (18).

11. Windenergieanlage nach einem der vorangehenden Ansprüche, **dadurch gekennzeichnet, daß** die Umkehr-Osmose-Anlage modular mit mehreren von einer Regeleinrichtung einzeln zu- und abschaltbaren Einheiten besteht.

12. Windenergieanlage nach einem der vorangehenden Ansprüche, **dadurch gekennzeichnet, daß** sie im Meer aufgestellt ist.

## Claims

1. Wind power plant having a tower (66), a gondola (22) carried by the latter, a rotor (10, 12) mounted in the gondola (22) and at least one pressure pump (20) feeding a reverse osmosis plant treating untreated water and mechanically driven by the rotor (10, 12), **characterized in that** the units of the reverse osmosis plant namely the untreated water reservoir, filter unit, pump units, reverse osmosis units, and drinking water tank are located in the tower (66).

2. Wind power plant according to claim 1 , **characterized in that** the at least one pressure pump (20) is located in the gondola (22).

3. Wind power plant according to claim 1 or 2, **characterized by** a gear (16) driven by the rotor hub (12) and driving the at least one pressure pump (20).

4. Wind power plant according to one of the preceding claims, **characterized by** a pressure reservoir (28) located between the pressure pump and the reverse osmosis plant units.

5. Wind power plant according to one of the preceding claims, **characterized in that** the pressure reservoir (28) is located in the gondola (22).

6. Wind power plant according to one of the preceding claims, **characterized in that** the reverse osmosis unit with the gondola (22) is mounted in rotary manner in the tower (66).

7. Wind power plant according to one of the preceding claims, **characterized in that** the untreated water to be treated is brackish water.

8. Wind power plant according to one of the preceding claims, **characterized in that** it is provided with an untreated water reservoir (48).

9. Wind power plant according to one of the preceding claims, **characterized by** a drinking water tank (40) located in the lower tower segment.

10. Wind power plant according to one of the preceding claims, **characterized by** an auxiliary generator (18) driven by the rotor hub (12).

11. Wind power plant according to one of the preceding claims, **characterized in that** the reverse osmosis plant comprises several modular units which can be individually connected and disconnected by a regulating device.

12. Wind power plant according to one of the preceding claims, **characterized in that** it is erected in the sea.

## Revendications

1. Éolienne comprenant une tour (66), une nacelle (22) portée par cette tour, un rotor (10, 12) monté dans cette nacelle (22) et au moins une pompe de refoulement (20), qui est entraînée mécaniquement par le rotor (10, 12) et qui alimente un système d'osmose inverse traitant une eau brute, **caractérisée en ce que** les organes du système d'osmose inverse, à savoir une réserve d'eau brute, un équipement de filtration, des unités de pompage, des unités d'osmose inverse et un réservoir d'eau potable, sont disposés dans la tour (66).

2. Éolienne selon la revendication 1, **caractérisée en ce que** la pompe de refoulement au moins unique (20) est disposée dans la nacelle (22).

3. Éolienne selon la revendication 1 ou 2, **caractérisée par** un mécanisme de transmission (16) entraîné par le moyeu de rotor (12) et entraînant la pompe de refoulement au moins unique (20).

4. Éolienne selon l'une des revendications précédentes, **caractérisée par** un accumulateur de pression (28) situé entre la pompe de refoulement et les organes du système d'osmose inverse.

5. Éolienne selon l'une des revendications précédentes, **caractérisée en ce que** l'accumulateur de pression (28) est disposé dans la nacelle (22).

6. Éolienne selon l'une des revendications précédentes, **caractérisée en ce que** le système d'osmose inverse est monté avec la nacelle (22) à rotation dans la tour (66).

7. Éolienne selon l'une des revendications précédentes, **caractérisée en ce que** l'eau brute à traiter est de l'eau saumâtre.

8. Éolienne selon l'une des revendications précédentes, **caractérisée en ce qu'**elle est pourvue d'une réserve (48) d'eau brute.

9. Éolienne selon l'une des revendications précédentes, **caractérisée par** un réservoir (40) d'eau potable disposé dans le segment inférieur de la tour.

10. Éolienne selon l'une des revendications précédentes, **caractérisée par** un générateur auxiliaire (18) entraîné par le moyeu de rotor (12).

11. Éolienne selon l'une des revendications précédentes, **caractérisée en ce que** le système d'osmose inverse est constitué de manière modulaire de plusieurs unités pouvant être individuellement activées et désactivées par un équipement de régulation.

12. Éolienne selon l'une des revendications précédentes, **caractérisée en ce qu'**elle est installée en mer.
